# EUROPEAN PATENT APPLICATION

(11) **EP 4 717 723 A1**
(43) Date of publication of application: **01.04.2026**
(21) Application number: 25203164.6
(22) Date of filing: 18.09.2025
(51) Int. Cl.: C08G 59/50, C08L 63/00

(54) **SELF-HEALING EPOXY-POLYSULPHIDE COATING COMPOSITIONS**

(30) Priority: 25.09.2024 EP 24202684
(71) Applicant: Sika Technology AG, 6340 Baar (CH)
(72) Inventor: THAKKAR, Jigneshkumar Dineshbhai, 126212 Dubai (AE)
(74) Representative: Sika Patent Attorneys

(57) **Abstract**

The invention is directed to epoxy-polysulfide based self-healing coating composition that incorporates novel modified silica fillers. This inventive coating composition is designed to offer enhanced protective properties and self-repair capabilities for various substrates, especially concrete and steel. The invention further relates to method of preparation of novel modified silica fillers for use in coating compositions, especially epoxy-polysulfide coating compositions. The invention provides and environmental friendly epoxy-polysulfide coating compositions that possess excellent self-healing properties.

## Description

### Technical field

The present invention pertains to abrasion-resistant self-healing coating compositions specifically designed for use on concrete, steel, and similar substrates. More particularly, the present invention relates to an epoxy-polysulfide based self-healing coating composition that incorporates novel modified silica fillers.

### Background of the invention

Corrosion of materials such as cement, concrete, metals and steel is a significant problem that affects the longevity and safety of infrastructure globally. These materials are integral to constructing buildings, bridges, water tanks, and roads etc. However, these materials are prone to deterioration when exposed to environmental factors such as moisture, salts, and pollutants. In order to eliminate this drawback, many efficient solutions were created, most of which were based on the protection of surfaces with some kind of coating. Coatings protect the underlying material from corrosion, moisture, bacterial growth, ultraviolet radiation and/or mechanical impact.

Applying organic coatings to substrate surfaces is an effective and straightforward method to reduce corrosion rates. However, mechanical damage to these coatings, such as scratches, cracks, and micro-cracks, can compromise their integrity. This allows water and oxygen to penetrate the coatings, leading to the corrosion of the underlying substrate. Cracks in coatings typically lead to the corrosion of the underlying material, necessitating costly and inefficient repairs or replacements. To maintain the integrity of the substrate, it may be necessary to periodically replace the coating, even if cracks have not yet formed.

Efforts to enhance the durability and effectiveness of anti-corrosive coatings have led to significant advancements in recent years. A key development in this field is the emergence of "smart self-healing coatings", a concept that has garnered considerable attention and research.

Smart self-healing coatings represents a significant advancement in corrosion protection technologies. These coatings, which can be intrinsic or extrinsic, offer autonomous repair capabilities that are not found in traditional coatings. Extrinsic coatings rely on microcapsules/nanocontainers filled with healing agents that are released in response to environmental triggers, such as the presence of moisture or a change in pH, to repair damage. This targeted release ensures that healing agents are only used when necessary, reducing waste and potentially lowering long-term maintenance costs. The intrinsic coatings utilize reversible bonds and can heal themselves without any external intervention, providing a continuous repair mechanism that can significantly extend the lifespan of surfaces. Intrinsic self-healing materials repair the damage by introducing dynamic bonds or interactions without healing agent. The dynamic bonds or interactions, such as Diels-Alder bonds, disulfide bonds, host-guest interactions, metal-ligand coordination and hydrogen bonds, were used for the preparation of the reversibly structures for self-healing. Self-healing materials, especially intrinsic self-healing material have become research hotspots in the 21st century by virtue of their advantages.

Among the various types of self-healing coatings, epoxy and polysulfide-based coatings stand out due to their unique properties and effectiveness in protecting materials from damage and corrosion. Epoxy self-healing coatings are known for their strong adhesion, chemical resistance, crack bridging, and mechanical strength. When damaged, these coatings can autonomously repair themselves through embedded microcapsules or other self-healing mechanisms. On the other hand, polysulfide self-healing coatings offer excellent flexibility, elasticity, abrasion resistance and resistance to harsh environmental conditions. These coatings are particularly useful in dynamic environments where substrates are subject to movement and stress. By incorporating self-healing technologies, both epoxy and polysulfide coatings significantly enhance the durability and reliability of protective surfaces, reducing maintenance costs and improving the longevity of infrastructure and industrial equipment.

Epoxy polysulfide coatings are particularly valued in industrial and marine environments, where protection against harsh chemicals, corrosive substances, and extreme weather conditions are critical. They are commonly used to coat steel structures, pipelines, storage tanks, potable water concrete tanks and marine vessels, providing long-lasting protection and reducing maintenance costs. Typically, epoxy polysulfide self-healing coatings are composed of a blend of an epoxy resin and a polysulfide resin, each contributing distinct properties to the coating's performance. The epoxy resin provides strong adhesion, chemical resistance, and structural integrity, while the polysulfide resin offers flexibility, elasticity, and resistance to environmental stressors. These coatings also incorporate silica fillers, which enhance mechanical strength and abrasion resistance.

The self-healing properties of epoxy polysulfide coatings are particularly noteworthy, allowing minor damages such as cracks and scratches to be repaired autonomously under normal conditions. This feature not only extends the lifespan of the coated substrate but also minimizes the need for frequent maintenance and repair.

EP 0 330 199 A1 discloses compositions comprising a polysulfide polymer and a hardener composition which contains an epoxy resin, sodium perborate and zinc oxide that can be used as sealants, coatings and adhesives in the construction field.

Despite the promising advantages, there are several challenges and disadvantages associated with smart self-healing coatings that need to be addressed. One major challenge is the cost of production, as the incorporation of advanced materials like microcapsules, nanocontainers, or specialized polymers can significantly increase manufacturing expenses. Additionally, the long-term stability and durability of these coatings are still under scrutiny, as environmental factors such as UV exposure, temperature fluctuations, and mechanical stress may affect their self-healing efficacy over time. The complexity of the coating's formulation and the need for precise control over the healing mechanism can also complicate large-scale production and application. Another concern is the potential trade-off between mechanical properties and self-healing functionality; enhancing self-healing capabilities may sometimes compromise the strength, toughness, or adhesion of the coating. Moreover, there may be concerns regarding the environmental impact and safety of certain self-healing agents, particularly if they are released into the environment during the healing process. Therefore, further research and development are required to overcome these challenges, optimize the performance of self-healing coatings, and make them more commercially viable and environmental friendly for widespread use.

In light of the current state of the art, it is desirable to manufacture novel self-healing coating compositions, which addresses many of the shortcomings of existing coating compositions.

Disclosed herein is a self-healing coating composition prepared using novel modified silica fillers.

### Summary of the invention

The object of the present invention is to provide improved self-healing epoxy-polysulfide coating compositions. In particular, the present invention employs novel silica **A²** (i.e. an allantoin-aminated silica) to obtain new and improved self-healing epoxy-polysulfide coating compositions. The silica **A²** is a modified silica filler which is obtained by treating/reacting an aminated silica particle with an allantoin-isocyanate prepolymer.

The subject of the present invention is a composition as defined in claim 1.

It was surprisingly found out that the disadvantages related to the prior art solutions can be solved or at least partially mitigated by using the self-healing coating composition of the present invention. The present invention provides a new improved epoxy-polysulfide coating composition with excellent self-healing properties.

Other aspects of the present invention are presented in other independent claims. Preferred embodiments of the invention are presented in the dependent claims.

### Brief description of the Drawing

Fig. 1 illustrates FTIR spectrum of silica **A²** particles which are obtained by treating aminated silica particles with an allantoin-isocyanate prepolymer.
Fig. 2 illustrates SEM images of silica **A²** particles which are obtained by treating aminated silica particles with an allantoin-isocyanate prepolymer.
Fig. 3 illustrate particle size distribution studies of silica **A²** particles which are obtained by treating aminated silica particles with an allantoin-isocyanate prepolymer.
Fig. 4 is an illustration of a concrete sample prepared with the epoxy-polysulphide coating of the prior art (i.e. Control sample without Silica **A²**), in which a crack has been initiated (FIG. 4a), in which the crack has been subjected to healing conditions (FIG. 4b).
Fig. 5 is an illustration of a concrete sample prepared with the claimed epoxy-polysulphide coating prepared in accordance with trial (I), in which a crack has been initiated (FIG. 5a), in which the crack has been subjected to healing conditions (FIG. 5b).
Fig. 6 is an illustration of a concrete sample prepared with the epoxy-polysulphide coating in accordance with trial (II), in which a crack has been initiated (FIG. 6a), in which the crack has been subjected to healing conditions (FIG. 6b).
Fig. 7 is an illustration of a concrete sample prepared with the epoxy-polysulphide coating in accordance with trial (III), in which a crack has been initiated (FIG. 7a), in which the crack has been subjected to healing conditions (FIG. 7b).
Fig. 8 is an illustration of a concrete sample prepared with the epoxy-polysulphide coating in accordance with trial (IV), in which a crack has been initiated (FIG. 8a), in which the crack has been subjected to healing conditions (FIG. 8b).

### Detailed description of the invention

The subject of the present invention is an epoxy-polysulfide coating composition, comprising:
i. at least one epoxy resin **A** having more than one epoxy group per molecule on average;
ii. at least one polysulphide resin; and
iii. Silica **A²**, wherein the silica **A²** is an aminated silica modified with an allantoin.

### Definitions

The recitation of a numerical range using endpoints includes all numbers subsumed within that range (e.g., 1 to 5 includes 1, 1.5, 2, 2.75, 3, 3.80, 4, 5, etc.).

The terms "a," "an," "the," "at least one," and "one or more" are used interchangeably. Thus, for example, a coating composition that contains "an" additive means that the coating composition includes "one or more" additives.

The term "Amino silica" or "Aminated Silica" relates to silica (i.e. silica particles), surfaces, or structures that have been functionalized with amino groups, such as primary or secondary amine groups (-NH₂ or -NH). This functionalization involves the attachment of amino groups to the silica framework, enhancing its chemical reactivity and enabling various applications across different fields. Amino silica combines the inherent properties of silica, such as high surface area, mechanical strength, and thermal stability, with the chemical versatility and reactivity of amino groups.

The term "adduct" refers to a compound that is formed when two or more distinct molecules or ions combine through a direct addition reaction, without losing any atoms from the original reactants. In this process, the molecules form a stable complex by creating new chemical bonds, but no atoms are removed or rearranged, as would occur in a substitution or elimination reaction. In the context of the present invention, the term "amine adduct" refers to a chemical compound that results from the reaction between an amine and another reactive species, such as an epoxy resin or isocyanate, through a direct addition process. The reaction leads to the formation of a stable intermediate product in which the amine is chemically bonded to the reactive species without the loss of any atoms.

The term "cementitious" refers to a substrate or material that comprises cement and has the properties or characteristics of cement, or that comprises a chemical precipitate, preferably of carbonates, having the characteristics of cement. Examples of cementitious substrates and materials include cement, burnished cement, concrete, polished concrete and cement fiberboard, and examples of places or applications where cementitious substrates may be employed include floors (e.g., garage floors), tiles (e.g., floor tiles), decks, boards and panels (e.g., fiber cement boards), and the like.

The term "coating" pertains to a layer of material that is applied to the surface of an object, often referred to as a substrate, to protect, enhance, or modify its surface properties. Coatings can serve various functions, such as providing corrosion resistance, improving aesthetic appearance, offering wear resistance, reducing friction, or imparting specific electrical, thermal, or chemical characteristics. Coatings can be made from a wide range of materials, including paints, polymers, metals, ceramics, and composites, and can be applied through different methods such as spraying, dipping, brushing, or electroplating. The choice of coating material and application method depends on the intended function, the properties of the substrate, and the environmental conditions to which the coated object will be exposed. A coating composition is a composition that will form a coating when it is contacted with a substrate and solidified/cured.

The term "comprises" and variations thereof does not have a limiting meaning where such term appears in the description or claims. For instance, a composition comprising an ethylenically unsaturated compound means that the composition includes one or more ethylenically unsaturated compounds.

The term "Concrete" is used to designate a mixture of hydraulic cement, aggregate and water, which sets to form a hardened mass. Concrete may contain either mineral or non-mineral aggregate, including naturally occurring materials, for instance, sand and gravel or quarried rock, or manufactured aggregate, such as expanded shale, clay or the like.

In the context of the present invention, the terms "scribe," "crack," "micro-crack," and "scratch" refer to different types of surface imperfections or damages that may occur on materials or coatings. In the context of coatings, the term "scribe" refers to a deliberate line or incision made through the coating layer to expose the underlying material. This is often done to test the coating's adhesion, durability, or resistance to corrosion. By creating a scribe, the performance of the coating can be evaluated under specific conditions, such as exposure to corrosive environments or mechanical stress, to see how well the coating protects the underlying substrate. The term "crack" in the context of present invention relates to a visible break or split in the coating layer that can compromise its protective properties. In contrast, a "micro-crack" refers to a much smaller, often microscopic fissure, generally caused by minor stresses or environmental factors, and though not visible to the naked eye, it can potentially propagate into larger cracks over time. The term "scratch" in the context of present invention relates to a shallow, linear abrasion on the surface of the coating that can reduce its effectiveness and potentially expose the underlying material to damage. A scratch typically affects only the surface layer, creating a visible mark or groove. Despite its relatively minor appearance compared to deeper damage, a scratch can still lead to problems such as corrosion or deterioration if it breaks through protective layers. In the context of the present invention the terms "scribe", "crack", "micro-crack", and "scratch" are used interchangeably to depict surface defects on a coated substrate.

The terms "modification" and "functionalization" are both processes used to alter the properties of a material, but they differ in their objectives and scope. The term "Modification" (or modified) generally refers to the process of changing a material's properties by altering its structure or composition. This can be done through various physical, chemical, or mechanical methods. The goal of modification is often to improve or enhance the material's existing properties, such as its strength, durability, or resistance to environmental factors. Modification can be broad and may not necessarily involve the addition of new functional groups or specific chemical entities. On the contrary the term "functionalization", relates to a more specific process that involves the introduction of new functional groups or molecules to the surface or structure of a material. The purpose of functionalization is to impart new functions or properties that were not originally present, such as increased reactivity, the ability to bind to specific molecules, or enhanced compatibility with other materials.

Functionalization is often used to tailor materials for specific applications. In summary, while modification refers to a broader range of processes aimed at improving material properties, functionalization is a targeted approach that involves adding new functionalities to a material.

In the context of silica particles, "modification" involves changing the surface chemistry or physical properties of the silica particles, such as by grafting, coating, or attaching different molecules or polymers, to improve properties like hydrophobicity, dispersibility, or compatibility with other materials. On the other hand, "functionalization" is a more specific process that introduces particular functional groups onto the surface of the silica particles, giving them defined chemical reactivity. This allows the particles to interact with other substances in a controlled manner, enabling their use in specialized applications such as catalysis, drug delivery, or material science. Together, these processes tailor the silica particles to meet the needs of specific industrial or research applications.

The term "mean particle size" preferably refers to the D (0.5) value from the cumulative volume distribution curve, indicating that 50% by volume of the particles have a size smaller than this value. The mean particle size, or D (0.5) value, is preferably measured using laser diffractometry.

The terms "preferred" and "preferably" refer to embodiments which may afford certain benefits, under certain circumstances. However, other embodiments may also be preferred, under the same or other circumstances. Furthermore, the recitation of one or more preferred embodiments does not imply that other embodiments are not useful, and is not intended to exclude other embodiments from the scope of the invention.

The term "polymer" refers to a substance containing more than 100 repeat units. The term "polymer" includes soluble and/or fusible molecules having long chains of repeat units, and also includes insoluble and infusible networks. A prepolymer is a substance containing less than 100 repeat units and that can undergo further reaction to form a polymer.

Substance names beginning with "poly", such as polyamine or polyepoxide, refer to substances containing, in a formal sense, two or more of the functional groups that occur in their name per molecule.

The term "prepolymer" in the context of the present invention relates to a partially polymerized material that serves as an intermediate in the production of a final polymer product. A prepolymer is typically designed with specific functional groups that allow it to undergo further polymerization or cross-linking to form a more complex, fully polymerized material. In various applications, prepolymers are used to customize properties such as flexibility, strength, and chemical resistance. In the context of coatings or self-healing materials, the prepolymer may be engineered to include reactive groups that facilitate the formation of a protective coating or composite when cured. It may also be involved in creating a matrix that incorporates healing agents, such as microcapsules or other additives, which are activated under certain conditions to repair damage and restore the integrity of the material. Overall, the prepolymer serves as a critical building block in the development of advanced materials with tailored properties and functionalities.

Room temperature" refers to a temperature of 23°C.

The term "self-healing" in the context of the present invention refers to the ability of a material or coating to autonomously repair damage, such as cracks, micro-cracks or scratches, with or without external intervention. This self-repairing capability ensures that the material maintains its protective properties and structural integrity over time, even after being subjected to mechanical stress or environmental degradation. The self-healing process can be triggered by various mechanisms, such as the release of healing agents from microcapsules embedded in the coating, the reformation of dynamic covalent bonds, or the interaction of functional groups like hydrogen bonds. This feature is particularly advantageous in coatings used to protect substrates, as it prolongs their lifespan, reduces maintenance costs, and ensures continuous protection against corrosion, moisture, ultraviolet radiation, and other damaging factors.

The terms "silica," "silicon dioxide", "nanosilica," and "nano silicon dioxide" refer to the same basic chemical compound, SiO₂, but in different forms and sizes. These terms are often used interchangeably in the context of materials science and coatings. In general, "Silica" and "silicon dioxide" generally refer to the compound in its bulk or larger particle form, while "nano silica" and "nano silicon dioxide" specifically refer to the compound when it is engineered at the nanoscale, typically with particle sizes below 100 nanometers. However, in the context of the present invention, the term "silica particles" may also include particles in the nanoscale range, i.e., those less than 100 nm.

The term "dosage" pertains to the precise amount of a specific additive or chemical compound incorporated into a material formulation to achieve optimal performance characteristics. This dosage is carefully calibrated and expressed as a percentage, indicating the proportion of the additive relative to the total composition. The correct dosage ensures that the material performs as intended under specified conditions, providing the desired benefits without compromising the overall quality or stability of the final product. The dosage must be meticulously calculated and controlled to ensure consistency and efficacy in the desired application.

Unless defined otherwise, all technical and scientific terms used herein have the same meaning as commonly understood by those of ordinary skill in the art.

As set forth above, there is pressing need to develop improved self-healing coating compositions. Disclosed herein are new improved abrasion resistant, self-healing epoxy-polysulfide coating compositions and methods thereof.

The claimed composition of the present invention has proven particularly effective for coating surfaces such as concrete or steel, those skilled in the art can appreciate that the inventive composition can be used in a variety of different applications and in a variety of different areas of manufacture to yield self-healing coated surfaces. Representative examples include commercial restaurant dining areas, interior and limited UV Resistance exterior flooring, stamped concrete, stamped or textured cementitious overlays, concrete countertops, vertical concrete applications, concrete building exteriors, statuary, hotel and lobby areas, and any other concrete surfaces subjected to harsh conditions, whether on new or existing concrete.

The claimed compositions may be applied to a variety of substrates, especially cementitious substrates, including concrete, cement, cement tiles, and fiber cement substrates. The compositions are particularly useful for coating cementitious substrates including concrete, cement floors and fiber cement articles. The claimed coating composition can also be utilized for non-cementitious substrates as well. Some of the representative examples of suitable non-cementitious substrates include, but are not limited to, wood (such as marine plywood or oriented strand board), metal (such as steel), or synthetic materials (such as insulation boards or composite panels) etc.

### Epoxy resin A

The claimed epoxy-polysulfide coating composition comprises at least one epoxy resin **A** having more than one epoxy group per molecule on average.

Suitable epoxy resins are standard industrial epoxy resins. These are obtained in a known manner, for example from the oxidation of the corresponding olefins or from the reaction of epichlorohydrin with the corresponding polyols, polyphenols or amines.

Particularly suitable epoxy resins are what are called liquid polyepoxide resins, referred to as "liquid resin" hereinafter. These have a glass transition temperature below 25° C.

Likewise, possible as epoxy resins are what are called solid resins which have a glass transition temperature above 25° C. and can be comminuted to powders that are pourable at 25° C.

Suitable epoxy resins are especially aromatic epoxy resins, especially the glycidylization products of:
- bisphenol A, bisphenol F or bisphenol A/F, where A stands for acetone and F for formaldehyde, which served as reactants for preparation of these bisphenols. In the case of bisphenol F, positional isomers may also be present, especially derived from 2,4'- or 2,2'-hydroxyphenylmethane.
- dihydroxybenzene derivatives such as resorcinol, hydroquinone or catechol;
- further bisphenols or polyphenols such as bis(4-hydroxy-3-methylphenyl)methane, 2,2-bis(4-hydroxy-3-methylphenyl)propane (bisphenol C), bis(3,5-dimethyl-4-hydroxyphenyl)methane, 2,2-bis(3,5-dimethyl-4-hydroxyphenyl)propane, 2,2-bis(3,5-dibromo-4-hydroxyphenyl)propane, 2,2-bis(4-hydroxy-3-tert-butylphenyl)propane, 2,2-bis(4-hydroxyphenyl)butane (bisphenol B), 3,3-bis(4-hydroxyphenyl)pentane, 3,4-bis(4-hydroxyphenyl)hexane, 4,4-bis(4-hydroxyphenyl)heptane, 2,4-bis(4-hydroxyphenyl)-2-methylbutane, 2,4-bis(3,5-dimethyl-4-hydroxyphenyl)-2-methylbutane, 1,1-bis(4-hydroxyphenyl)cyclohexane (bisphenol Z), 1,1-bis(4-hydroxyphenyl)-3,3,5-trimethylcyclohexane (bisphenol TMC), 1,1-bis(4-hydroxyphenyl)-1-phenylethane, 1,4-bis[2-(4-hydroxyphenyl)-2-propyl]benzene (bisphenol P), 1,3-bis[2-(4-hydroxyphenyl)-2-propyl]benzene (bisphenol M), 4,4'-dihydroxydiphenyl (DOD), 4,4'-dihydroxybenzophenone, bis(2-hydroxynaphth-1-yl)methane, bis(4-hydroxynaphth-1-yl)methane, 1,5-dihydroxynaphthalene, tris(4-hydroxyphenyl)methane, 1,1,2,2-tetrakis(4-hydroxyphenyl)ethane, bis(4-hydroxyphenyl) ether or bis(4-hydroxyphenyl) sulfone;
- condensation products of phenols with formaldehyde that are obtained under acidic conditions, such as phenol novolacs or cresol novolacs, also called bisphenol F novolacs;
- aromatic amines such as aniline, toluidine, 4-aminophenol, 4,4'-methylenediphenyldiamine, 4,4'-methylenediphenyldi(N-methyl)amine, 4,4'-[1,4-phenylenebis(1-methylethylidene)]bisaniline (bisaniline P) or 4,4'-[1,3-phenylenebis(1-methylethylidene)]bisaniline (bisaniline M).

Further suitable epoxy resins are aliphatic or cycloaliphatic polyepoxides, especially
- glycidyl ethers of saturated or unsaturated, branched or unbranched, cyclic or open-chain di-, tri- or tetrafunctional C2 to C30 alcohols, especially ethylene glycol, propylene glycol, butylene glycol, hexanediol, octanediol, polypropylene glycols, dimethylolcyclohexane, neopentyl glycol, dibromoneopentyl glycol, castor oil, trimethylolpropane, trimethylolethane, pentaerythritol, sorbitol or glycerol, or alkoxylated glycerol or alkoxylated trimethylolpropane;
- a hydrogenated bisphenol A, F or A/F liquid resin, or the glycidylization products of hydrogenated bisphenol A, F or A/F;
- an N-glycidyl derivative of amides or heterocyclic nitrogen bases, such as triglycidyl cyanurate or triglycidyl isocyanurate, or reaction products of epichlorohydrin with hydantoin.
- epoxy resins from the oxidation of olefins such as, in particular, vinylcylohexene, dicyclopentadiene, cyclohexadiene, cyclododecadiene, cyclododecatriene, isoprene, 1,5-hexadiene, butadiene, polybutadiene or divinylbenzene.

A preferred epoxy resin is a liquid resin.

Particularly preferred as epoxy resin is a liquid resin based on a bisphenol. Most preferred as epoxy resin is a liquid resin based on a diglycidyl ether of bisphenol A, of bisphenol F or of bisphenol A/F, of the kind commercially available, for example, from Dow, Huntsman or Momentive. These epoxy resins have readily manageable viscosity and enable high strengths and resistances. Such liquid resins may also include fractions of solid bisphenol A resin or phenol novolacs.

Preferably, the epoxy resin **A** is selected from the group consisting of at least one bisphenol A epoxy resin, bisphenol F epoxy resin, novolac epoxy resin, aliphatic epoxy resin, cycloaliphatic epoxy resin, glycidylamine epoxy resin, or a combination thereof.

A particularly preferred group of commercially available epoxy resins that can be used in the present invention includes Epoxy resin YD128 (from Aditya Birla Chemicals), BE188EL (from Chang Chun Plastic), Epoxy resin KER828 (from Shin-Etsu Chemical Co.), and Razeen LR 1100 (from Jubail Chemical Industries Co.).

The composition preferably has an epoxy resin **A** content in the range from 25 to 85 weight %, more preferably 30 to 75 weight %, more particularly 35 to 70 weight %, based on the total weight of the epoxy-polysulfide coating composition.

### Polysulfide Resin

The claimed epoxy-polysulfide coating composition comprises at least one polysulfide resin.

The polysulfide resin is selected from the group comprising at least one aliphatic polysulfide, an aromatic polysulfide, a thiol-terminated polysulfide, a mercaptan-terminated polysulfide, and mixtures thereof. Suitable examples of the polysulfide resins include aliphatic polysulfides such as those in the Thiokol LP series (e.g., LP-2, LP-3,LP-33), Thioplast series (e.g.,G4/G44) which offer flexibility and chemical resistance; aromatic polysulfides like those derived from phenyl or benzyl groups, which provide enhanced thermal stability; thiol-terminated polysulfides, which are used for their strong adhesive properties and reactive end groups that can form cross-linked networks; and mercaptan-terminated polysulfides such as "Chemosil 512" or equivalent, known for their excellent resistance to solvents and weathering. These examples illustrate the versatility of polysulfide resins in enhancing the performance of epoxy-polysulfide coating compositions. Other examples may include solid or semi-solid polysulfide resins, which can be used to enhance the mechanical strength and durability of the coating. Additionally, modified polysulfide resins that have been tailored to improve compatibility with epoxy systems or to achieve specific performance characteristics may also be suitable for use in this composition.

Preferably, the polysulfide resin is selected from the group consisting of at least one aliphatic polysulfide, an aromatic polysulfide, a thiol-terminated polysulfide, a mercaptan-terminated polysulfide, and mixtures thereof.

Particularly, preferred examples of the commercially available polysulphides, which can be used in the present invention, are Thiokol LP series (e.g., LP-2, LP-3, LP-33),

The claimed coating composition preferably has a polysulfide resin content in the range from 15 to 70 weight %, more preferably 20 to 65 weight %, more particularly 25 to 60 weight %, based on the total weight of the epoxy-polysulfide coating composition.

In a preferred embodiment of the invention, the polysulfide resin is used in the form of an adduct, wherein the polysulfide is chemically reacted with another component, preferably and amine compound, prior to its incorporation into the final composition. This adduct formation enhances the compatibility and performance of the polysulfide resin within the system. The use of the polysulfide resin in adduct form is particularly advantageous in applications requiring enhanced mechanical durability and environmental resistance.

Suitable examples of the commercially available epoxy-polysulfide coating compositions which can be used in the present invention are, but are not limited to, PPG PSX^{®} 700 (PPG Industries Inc.), Araldite^{®} Epoxy-Polysulfide Coatings (Huntsman Advanced Materials), Flexicoat Epoxy-Polysulfide Coatings (Sherwin-Williams). Carboguard Epoxy-Polysulfide Coatings (RPM International Inc. (Carboline), Sikagard^{®} Epoxy-Polysulfide Coatings (Sika), AMI Epoxy-Polysulfide Coatings (Autonomic Materials, Inc.), ChemLine^{®} Self-Healing Coatings (Advanced Polymer Coatings), NANOMYTE^{®} MEND (NEI Corporation), Desmodur^{®} and Bayhydur^{®} Coatings (Covestro).

### Silica A² (i.e. Allantoin-aminated Silica):

The claimed epoxy-polysulfide coating composition comprises silica **A².**

In coatings, silica particles, are frequently used to improve mechanical properties such as durability, hardness, and resistance to wear and corrosion. In addition to their mechanical benefits, silica particles also contribute to the optical transparency and thermal stability of coatings, making them ideal for applications in construction, electronics and even in the biomedical field. Their versatility and compatibility with different matrices make silica particles an advantageous component in advanced material science.

Preferably, silica particles are ultra-fine particles with sizes typically ranging from 1 to 100 nanometers. Due to their small size, these particles exhibit unique properties such as a large surface area, high surface reactivity, and enhanced mechanical strength compared to their bulk counterparts. They are widely used in various fields especially coatings.

Unmodified silica particles are silica particles that have not undergone any surface functionalization or modification. These particles retain their natural properties, such as high surface area, hydrophilicity, and a tendency to form hydrogen bonds. However, their strong tendency to agglomerate and their lack of compatibility with non-polar matrices can limit their effectiveness in certain applications. To enhance their dispersion and compatibility with different materials, surface modification or functionalization is often required, which can tailor their properties to specific needs, especially in fields like coatings.

Modified silica particles are particularly valuable in coatings, adhesives, and sealants, where the modified silica can improve adhesion, durability, and overall performance.

The claimed epoxy-polysulfide coating composition of the present invention include silica **A²**, wherein the silica **A²** is an aminated silica modified with an allantoin.

Allantoin belongs to the class of compounds known as heterocyclic urea derivatives. Allantoin is a diureide of glyoxylic acid with the chemical formula C₄H₆N₄O₃. It is also called 5-ureidohydantoin, glyoxyldiureide, and 5-ureidohydantoin. Allantoin is a naturally occurring compound with a structure that includes both a urea group and an imidazolidine-2,4-dione. ring. Allantoin is commonly used in skincare and pharmaceutical formulations to promote skin repair and soothe irritation. The use of allantoin in pharmaceutical compositions, especially in promoting cell regeneration and tissue repair, is well documented. However, its application in the construction industry is not known. Despite its proven effectiveness in medical and skincare formulations, there is little to no research or practice involving allantoin in construction field, leaving its potential benefits in this sector unexplored.

To leverage the beneficial effects of allantoin, the inventors sought to incorporate allantoin into coating formulations. They specifically believe that allantoin-modified silica particles will improve the properties of the coating formulations, especially self-healing properties. In particular, the modification of silica particles with allantoin was aimed at developing a coating formulation that not only improves the material's ability to repair itself after damage but also provides additional benefits, such as increased protection against environmental stressors.

Surprisingly, the inventors found that by using a specific allantoin-modified silica particle, particularly Silica **A²**, which was obtained by reaction of (i) aminated silica particles and (ii) an allantoin-isocyanate prepolymer, an epoxy-polysulfide coating composition with improved self-healing properties can be obtained.

Without wishing to be bound by any particular theory, the present inventors believe that the Silica **A²** aids in hydrogen bonding, especially quadrupole hydrogen bonding, to enhance the self-healing property of the epoxy-polysulfide coating composition. This type of modification introduces functional groups on the surface of the silica particles that can interact with the epoxy and polysulfide components through hydrogen bonds. Quadrupole hydrogen bonding involves interactions between quadrupole moments of polarizable groups, which can significantly improve the cohesion and adhesion properties of the coating. These interactions facilitate better integration of the modified silica particles within the resin matrix, promoting a more uniform distribution of healing agents and enhancing the material's ability to repair itself upon damage. By strengthening the network of hydrogen bonds, the silica **A²** contribute to a more resilient and effective self-healing mechanism, allowing the coating to recover from scratches, cracks, or other forms of damage more efficiently. This results in a coating with improved durability, extended service life, and enhanced performance in various environmental conditions.

Suitable examples of commercially available silica particles which can be used in the preparation of Silica **A²** of the present invention are Aerosil^{®} 200 from Evonik, LUDOX^{®} HS-40 from Grace, Cab-O-Sil^{®} M-5 from Cabot, Nyacol^{®} NanoSilica from Nyacol Nano Technologies, and Elkem Silicones' Ultrasil^{®}. Preferably, the silica particles, which are employed for the preparation of Silica **A²**, are nanosilicas, preferably hydrophilic nanosilicas.

Suitable examples of commercially available allantoin which can be used in the present invention include, but are not limited to, BASF's Lipidure^{®} PMB4, Ashland's Allantoin USP, DSM's Allantoin EP/BP, Spectrum Chemical's Allantoin USP, MP Biomedicals' Allantoin, VWR's Allantoin, Sigma-Aldrich (Merck) offers Allantoin, Croda's NatraGem^{™} E145, Allantoin Sihauli chemicals Pvt Ltd India, and Allantoin Extra Pure 98.5%.

Preferably, silica **A²** has mean particle size in the range of 0.5-300 µm, preferably 10-250 µm, more preferably 20-100 µm, even more preferably 25-70 µm, wherein the mean particle size is preferably determined by laser diffractometry.

Preferably, the silica **A²** is present in 1-50%, preferably 2-35%, more preferably 3-30%, even more preferably 5-20% by weight, based on the total weight of the epoxy-polysulfide coating composition.

Preferably, the epoxy-polysulfide coating composition further comprises one or more materials selected from the group consisting of a curing agent, an additive, an adhesion promoter, a filler, an accelerator, and a pigment.

### Adhesion Promoter

The epoxy-polysulfide coating composition preferably includes at least one adhesion promoter, preferably a silane adhesion promoter.

Suitable examples of the adhesion promoters which can be used in the present invention include, but are not limited to, aminosilanes having secondary amino groups, such as, in particular, N-phenyl-aminosilanes, N-cyclohexyl-aminosilanes or N-alkyl-aminosilanes, epoxysilanes, such as, in particular, 3-glycidoxypropyltrimethoxysilane, (meth) acrylsilanes, anhydridosilanes, carbamoylsilanes, alkylsilanes or iminosilanes, or oligomeric forms of these silanes, or adducts of primary aminosilanes with epoxysilanes or (meth) acrylsilanes or anhydridosilanes.

Commercial examples of particularly preferred adhesion promoters are Silquest A1100/KH550 (an aminosilane) and Silquest A187/KH 560 (an epoxysilane).

Preferably, the adhesion promoter is present in 0-20%, preferably 1-20%, more preferably 1-10% by weight, based on the total weight of the epoxy-polysulfide coating composition.

### Pigments

The epoxy-polysulfide coating composition preferably includes at least one pigment.

Pigments, in particular titanium dioxide or iron oxide.

In a preferred embodiment the epoxy-polysulfide coating composition includes pigments in the form of a pigmented paste.

The term "pigmented paste" refers to a semi-solid formulation composed of pigments finely dispersed in a carrier medium. The carrier medium in the paste helps in easy dispersion and application of the pigments into the desired product or system.

Pigmented pastes are often preferred for their high pigment concentration, ease of handling, and ability to ensure consistent color quality in final products. They can be customized based on the required properties of the final product, such as viscosity, drying time, and durability.

Representative examples of the commercially available pigments which can be used in the present invention are TiONA^{®} 121 by Tronox (a titanium dioxide based blue pigmented paste), TIOXIDE^{®} R-902+ (titanium dioxide from Venator), Clariant's Hostaperm^{®} Pink E, BASF's Luconyl^{®} Pink 4815.

### Curing agent (or a curative compound)

The epoxy-polysulfide coating composition preferably includes at least one curing agent, wherein the curing agent is preferably an amine and/or a polyamide, preferably a polyetheramine or a cycloaliphatic amine or a polyamide resin, preferably a polyetheramine.

The curing agent is advantegeous for the formation of an adduct in an epoxy-polysulfide coating by facilitating the chemical reaction between the epoxy resin **A** and the polysulfide resin. When the curing agent, typically an amine, polyamide, or other reactive hardener, is introduced, it initiates the cross-linking process between the functional groups of the epoxy and polysulfide resins. This reaction helps bind the two resins together, forming an integrated adduct. The curing agent's function is to open the epoxy rings, allowing them to chemically react with the active sites of the polysulfide, creating a durable and cohesive network.

Suitable examples of the commercially available curative compounds which can be used in the present invention are polyetheramine (Jeffamine D230, Ethermine RC 230, Epocure PEA 230, Baxodur EC301) or cycloaliphatic amine (e.g., Baxodur EC201, Vestamin IPDA, Wanamine IPDA) or polyamide resin (e.g., Jointmide 343, Synpol 160) or a combination thereof.

### Curing accelerators

The epoxy-polysulfide coating composition preferably include at least one curing accelerators.

Suitable curing accelerators are substances that accelerate the reaction between amino groups and epoxide groups, more specifically organic carboxylic acids such as acetic acid, benzoic acid, salicylic acid, 2-nitrobenzoic acid, lactic acid, organic sulfonic acids such as methanesulfonic acid, p acid toluenesulfonic or 4-dodecylbenzenesulfonic acid, esters of sulfonic acid, other organic or inorganic acids such as in particular phosphoric acid, or mixtures of the acids and acid esters mentioned above; tertiary amines such as, in particular, 1,4-diazabicyclo [2,2,2] octane, benzyldimethylamine, α-methylbenzyldimethylamine, triethanolamine, dimethylaminopropylamine, imidazoles such as in particular N-methylimidazole, N-vinylimidazole or 1,2-dimethylimidazole, salts of such tertiary amines, quaternary ammonium salts such as, in particular, benzyltrimethylammonium chloride, amidines such as, in particular, 1.8 -diazabicyclo [5.4.0] -undec-7-ene, guanidines such as, in particular, 1,1,3,3-tetramethylguanidine, phenols, especially bisphenols, phenolic resins or Mannich bases such as, in particular, 2-(dimethylaminomethyl) phenol, 2,4,6-tris (dimethylaminomethyl) phenol or polymers of phenol, formaldehyde and N, N-dimethyl-1,3-propanediamine, phosphites such as, in particular, di- or triphenylphosphites, or compounds containing mercapto groups. Preferred accelerators are Mannich acids, tertiary amines or bases.

Most preferred is salicylic acid or 2,4,6-tris (dimethylaminomethyl) phenol or a combination thereof.

In a preferred embodiment of the invention, the epoxy polysulfide coating composition of the present invention is a two-part composition consisting of a resin component and a hardener component.

The resin component preferably includes the epoxy resin **A,** the silica **A²**, the pigment and the adhesion promoter.

The hardener component preferably includes the polysulfide resin and the curing agent. The hardener component may also include the curing accelerator.

The two components of the epoxy-polysulphide coating composition are each stored in their own container. Further constituents of the epoxy resin composition may be present as part of the resin component or of the hardener component, with further constituents that are reactive toward epoxide groups preferably being part of the hardener component. A suitable container for storing the resin component or the hardener component is, in particular, a drum, a Hobbock, a pouch, a pail, a canister, a cartridge or a tube. The components are storable, meaning that they can be kept for several months up to a year or more before being employed, without suffering alteration in their respective properties to any extent relevant for their use. For the use of the epoxy resin composition, the resin component and the hardener component are mixed with one another shortly before or during application. The mixing ratio between the two components is preferably selected such that the groups of the hardener component that are reactive toward epoxide groups are present in an appropriate ratio to the epoxide groups of the resin component. In terms of parts by weight, the mixing ratio between the resin component and the hardener component is customarily in the range from 1:10 to 10:1.

The two components are mixed by means of suitable method; this may take place continuously or batchwise. If mixing takes place prior to application, it should be ensured that not too much time elapses between the mixing of the components and application, since otherwise there may be disruptions, such as retarded or incomplete development of adhesion to the substrate, for example. Mixing takes place in particular at ambient temperature, which is typically in the range from about 5 to 50° C., preferably at about 10 to 30° C. The mixing of the two components is at the same time the start of curing through chemical reaction, as described above. Curing takes place in particular at ambient temperature. It typically extends over several days to weeks, until it has largely concluded under the prevailing conditions. The duration is dependent on factors including the temperature, the reactivity of the constituents and their stoichiometry, and also the presence of accelerators.

In a particularly preferred embodiment of the invention, the epoxy-polysulfide coating composition is a two-part composition comprising a resin component and a hardener component, wherein:
a) the resin component comprises:
   50-70 wt% of the epoxy resin **A;**
   3-20 wt% of the silica **A²;** and
   0-10 wt% of the pigment;
b) the hardener component comprises:
   10-60 wt% of the polysulfide resin; and
   10-60 wt% of the curing agent, wherein the curing agent is preferably selected from the group consisting of an amine and/or a polyamide, and wherein the weight percentages are based on total weight of the epoxy-polysulfide coating composition.

Preferably, the silica **A²** is obtained by a process comprising the steps of:
i. modifying silica particles by using an aminosilane to obtain aminated silica particles;
ii. reacting allantoin with a polyisocyanate, preferably a diisocyanate to obtain an allantoin-isocyanate prepolymer; and
iii. reacting the aminated silica particles with the allantoin-isocyanate prepolymer to obtain Silica **A².**

In step (i) a silica particles are modified by using an aminosilane to obtain aminated silica particles.

Preferably, the silica particles used in the present invention for the preparation of aminated silica particles are nanosilica, preferably hydrophilic nanosilica. These type of silica particles possesses strong affinity for water, which aids in the even distribution and interaction of the silica particles with amine functional groups during the functionalization process. The hydrophilic nature of the nanosilica facilitates the reaction with amines, leading to a more efficient and uniform functionalization, which is advantageous for the development of aminated silica particles with enhanced reactivity.

In the present invention, the silica particles are aminated through a surface modification process using an aminosilane. This process involves the covalent bonding of the aminosilane molecules to the surface of the silica particles, introducing amine (-NH₂) functional groups onto the surface of the silica particles. The presence of these amine groups significantly alters the surface chemistry of the silica particles, enhancing their compatibility with various organic matrices and improving their ability to form stable dispersions in different solvents. This aminated silica particles can effectively interact with polymers, resins, and other materials. The introduction of amine groups also allows for further functionalization or cross-linking. This helps in creating advanced materials with tailored properties for specific industrial uses.

In a preferred embodiment, the aminosilane is preferably 3-aminopropyltrimethoxysilane or 3-aminopropyltriethoxysilane, more preferably 3-aminopropyltriethoxysilane (APTES).

Surface modification of silica particles with an aminosilane leads to the formation of aminated silica particles. Aminosilanes are primarily used as silane coupling agents to enhance the bonding between inorganic materials, such as silica, and organic polymers.

Suitable examples of the commercially available 3-aminopropyltriethoxysilane (APTES) which can be used in the present invention include, but are not limited to, Dynasylan^{®} AMEO by Evonik Industries. Silquest^{®} A-1100 by Momentive Performance Materials, Geniosil^{®} GF 91 by Wacker Chemie AG, Prosil 2200 by PCR Incorporated, SiSiB^{®} PC1100 by Power Chemical Corporation (PCC), KH550 by Anhui SinoGrace Chemical Company Ltd, Z 6011 by Dow chemicals, KBM-903 Shin-Etsu.

In step (ii) an allantoin is reacted with a polyisocyanate, preferably diisocyanate to obtain an allantoin-isocyanate prepolymer.

In a preferred embodiment, an allantoin-isocyanate prepolymer is prepared by reacting an allantoin which contains a terminal (-NH2) groups) with a diisocyanate. The preparation of the allantoin-isocyanate prepolymer, basically involves a reaction between an amine-functionalized molecule (i.e. allantoin) and a diisocyanate. In this reaction, the diisocyanate, which contains two reactive isocyanate (-NCO) groups, reacts with the amine-functionalized molecule. When these groups react, they form urea linkages (-NH-CO-NH-), rather than the urethane linkages formed with hydroxyl groups.

Preferably, the diisocyanate is an aliphatic diisocyanate, or an aromatic diisocyanate, or a cycloaliphatic diisocyanate, more preferably the diisocyanate is an aliphatic diisocyanate, even more preferably 1, 6-hexamethylene diisocyanate (HDI).

Preferably, the aliphatic diisocyanate used in the present invention has 4 to 30 carbon atoms. Examples of the aliphatic diisocyanate include tetramethylene diisocyanate, 1,5-pentamethylene diisocyanate, 1,6-hexamethylene diisocyanate (hereinafter referred to as "HDI"), 2,2,4- (or 2,4,4-) trimethyl-1,6-hexamethylene diisocyanate, lysine isocyanate, isophorone diisocyanate, hydrogenated xylene diisocyanate, hydrogenated diphenylmethane diisocyanate, 1,4-diisocyanatocyclohexane, 1,3-bis(diisocyanatomethyl)cyclohexane, and 4,4'-dicyclohexylmethane diisocyanate. Among them, HDI is preferred in view of weather resistance and commercial availability. Although each of the above-mentioned aliphatic diisocyanates may be used alone or in combination, it is preferably used alone.

In step (iii) the aminated silica particles are reacted with the allantoin-isocyanate prepolymer to obtain silica **A²**

The process of reacting aminated silica particles with an allantoin-isocyanate prepolymer to obtain Silica **A²** involves a chemical interaction that grafts the allantoin-isocyanate prepolymer onto the surface of the aminated silica particles, thereby enhancing their compatibility and reactivity with various matrices. As a result of this reaction, the silica particles become functionalized, meaning they are now coated with a polymeric layer that originates from the allantoin-isocyanate prepolymer. This functionalized layer can impart new properties to the aminated silica particles, such as improved dispersibility in organic matrices, enhanced mechanical properties, and tailored surface chemistry.

In another aspect, the present invention relates to a silica filler for coating compositions, characterized in that the silica filler comprises silica **A².**

In yet another aspect, the present invention relates to a coated substrate, characterized in that at least a portion of the said substrate is coated with the epoxy-polysulfide coating composition of the present invention.

Preferably, the substrate is selected from the group consisting of cementitious substrates, concrete, steel, and wood, preferably concrete or steel, and more preferably concrete.

In a preferred embodiment, in order to apply the coating composition of the present invention onto a concrete surface, the concrete surface should be clean and free from dirt, oil, grease, paint, water repellants such as sealers, friable matter and curing compounds.

In a preferred embodiment, prior to applying coating, the substrate is cleaned using high pressure water jetting, grit blasting or other methods known in the art.

In a preferred embodiment, prior to applying a coating composition a primer may also be applied on the concrete surface. Use of primer can significantly enhance the adhesion and performance of the final coating. A primer acts as an intermediary layer that improves the bond between the concrete surface and the subsequent coating. It is especially beneficial when dealing with surfaces that are porous, uneven, or prone to contamination, as it helps to seal the concrete, creating a uniform substrate for the coating to adhere to.

The primer helps to fill in any minor surface imperfections and can also enhance the bonding of the coating by promoting better chemical interaction between the two layers. The application of a primer also aids in preventing the absorption of the coating into the concrete, which can otherwise lead to uneven coverage and reduced coating effectiveness.

Examples of suitable primers which can be used in the context of the present invention incudes are Sikafloor^{®} P 650, SikaEmaco P102, Sherwin-Williams' Macropoxy^{®} 920 Pre-Prime, Rust-Oleum^{®} Concrete Saver^{®} Epoxy Primer 608. These primers are well-regarded for their ability to prepare concrete surfaces for the application of epoxy-polysulfide coatings, ensuring long-lasting protection and performance.

In a preferred embodiment, the coating composition of the invention is applied on a substrate using an application method selected from spraying, brushing or rolling. Preferably, the coating composition of the present invention is applied to concrete surface by brush.

In another aspect, the present invention relates to a method for self-healing the coated substrate, after it has been damaged by a scratch or a crack, preferably by a scratch, characterized in that the method comprises the steps of:
i. optionally placing the coated substrate inside an oven; and
ii. heating the coated substrate to a temperature from 30 °C to 100 °C, preferably from 35 °C to 50 °C, preferably for 15 Hrs to 10 days, preferably 24 Hrs to 7 days.

Preferably, the size of the scratch is 20-300 micron, preferably 50-200 micron, more preferably 70-150 micron, even more preferably 80-120 micron.

In yet another aspect, the present invention relates to use of the epoxy polysulfide coating composition of the present invention to self-repair damages on a surface of the coated substrate.

### Examples

Set out below are a number of examples which further illustrate the invention but are in no way intended to restrict the scope of the invention. Unless indicated otherwise, all proportions and percentages are by weight. The examples are merely illustrative and not intended to be construed as limiting application of the present invention.

### Materials & Methods

The following listed raw materials are utilised to obtain the self-healing epoxy-polysulphide coating composition of the present invention.

| **Raw material** | **Source** |
|---|---|
| Hydrophilic Silica particles | Cabot- Cab-o-Sil M5 |
| *(3-Aminopropyl)triethoxysilane (APTES)* | Momentive Silquest A1100 |
| Allantoin Exiplus 98.5% | Coral Laboratories and chemicals trading LLC (SRL 43805) |
| HDI | Emirates Scientific & Technical Supplies LLC |
| Epoxy resin | Grasim Industries |
| Polyether amine | Huntsman |
| Liquid Polysulfide | WESSINGTON GROUP LTD |
| Accelerator | Recon Chemicals |
| Pigment Titanium Dioxide | Venator italy S.R.L |
| Pigment Paste Blue | European Masterbatch n.v. |
| Pigment Paste Pink | European Masterbatch n.v. |
| Silane Adhesion Promoter | Trychem FZCO |

### FTIR Studies

Fourier Transform Infrared Spectroscopy (FT-IR) spectra were recorded. A NICOLET iS20 from Thermofischer spectrometer was employed within the spectrum of 500-4000 cm⁻¹. The FT-IR measurements were performed in solid state.

### Scanning Electron Microscope (SEM):

A Thermofischer Axia ChemiSEM Low vacuum SEM EDS Scanning Electron Microscope (SEM) was used to study the morphological and structural properties of the Silica **A².**

### Contact Angle Studies

Contact angle measurements were conducted using a Goniometer. The studies were performed with the Ossila contact angle analyzer, a device manufactured in the Netherlands, to evaluate the contact angle properties.

Contact angle measurements of the coated concrete substrates were realized to obtain data regarding the polarity of the coatings. The measurements were conducted in a closed sample chamber, in saturated atmosphere, with 5 µL distilled water droplets. The contact angle was determined using the Image J software, with an uncertainty of ±0.1.

### Particle Size Test Method

The particle size of the silica **A²** particles was measured using laser diffraction with a HELOS (H3681) particle size analyzer and a RODOS/L, R4 dispersing system. The measurement process began with the preparation of the silica **A²** sample, ensuring it was free from moisture and contaminants to provide accurate results. The particles were then dispersed using the RODOS/L, R4 system, which employed an air stream to ensure individual particle dispersion and avoid agglomeration. The dispersed particles passed through the laser beam in the HELOS (H3681) analyzer, where the scattering of light by the particles was measured. Based on Mie scattering theory, the system calculated the particle size distribution, expressed in terms of D10, D50, and D90 values, representing the 10^{th}, 50^{th}, and 90^{th} percentiles of the size distribution. The results were analyzed and reported to give a detailed understanding of the particle size characteristics of the silica **A²** sample.

### Abrasion test:

Taber Abrasion (CS-17/1000c): Taber abrasion was determined as the loss of material from the abraded surface of the coating material, caused by the cutting or scratching effect of an abrasive wheel. in accordance with ASTM D4060. A "Taber Abraser Model 5131" from Taber Industries was used as the machine for the abrasion test, together with a CS-17 Calibrase wheel, applying 1000 cycles with 1kg weight. Abrasion was determined with an analytical balance in milligrams.

### Tensile & Elongation test

Tensile & Elongation properties measured via Zwick Roell UTM machine Z020. The tensile strength (breaking force) and elongation at break were tested as described for the coating compositions, following the procedures outlined in ASTM D638 Standard Test Method for Tensile Properties of Plastics.

### Preparation Procedures:

### I. Procedure for preparing aminated silica particles:

To prepare aminated silica particles, start by dispersing a 12 gm of silica particles in 80 ml solvent like MEK or acetone, using a magnetic stirrer to achieve a homogeneous silica suspension. For enhanced dispersion, the mixture can be sonicated in an ultrasonic bath for 30 minutes. Separately, prepare a solution of 3-aminopropyltriethoxysilane (APTES) by adding 4 gm by weight into the silica suspension. The reaction mixture is stirred continuously, and the process can be conducted at a temperature ranging from slightly elevated levels up to 55°C. If necessary, adjust the solution's pH to slightly basic using 2-4 gm ammonia to facilitate the hydrolysis and condensation of APTES on the surface of silica particles. Allow the reaction to proceed for 6 hours under continuous stirring, with an inert nitrogen atmosphere maintained to avoid moisture interference. After the reaction, the aminated silica particles are separated by centrifugation at 10,000-15,000 rpm for 10-20 minutes. The resulting aminated silica particles are washed several times with n-Hexane to remove unreacted APTES and by-products. Finally, the purified aminated silica particles are dried in a vacuum oven at 60-80°C for several hours until all solvents are evaporated, or alternatively, air-dried under a fume hood. The aminated silica particles can then be characterized using various techniques to confirm successful functionalization.

### II. Process for preparing Allantoin-Isocyanate prepolymer:

To prepare an allantoin-isocyanate prepolymer using hexamethylene diisocyanate (HDI), begin by charging a dry, inert reaction vessel with the 16 gm allantoin under an inert nitrogen atmosphere to prevent unwanted moisture from reacting with the isocyanate groups. Once the desired temperature 100°C is reached, slowly add 184 gm HDI to the vessel in a stoichiometric excess to ensure that the resulting prepolymer has free isocyanate (NCO) end groups. Add 0.1 gm of catalyst DBDTL (Dibutyl tin dilaurate). The reaction mixture is maintained at the set temperature with continuous stirring for 24-30 hours to allow the HDI to react with the amine groups, forming urea linkages and resulting in the desired prepolymer with terminal NCO groups. Throughout the reaction, monitoring the NCO content using titration or infrared spectroscopy is advisable to ensure the reaction's progress and completion. Once the reaction is complete, the resulting allantoin-isocyanate prepolymer is cooled to room temperature and vacuum drying carried out for further process, depending on the intended application. The prepolymer should be stored in a sealed container under an inert atmosphere to prevent reaction with atmospheric moisture.

### III. Process for preparing Silica A² (i.e. Allantoin-aminated silica):

To react aminated silica particles with allantoin-isocyanate prepolymer, use previously dispersed the aminated silica particles in an appropriate solvent, such as MEK or Acetone, in same reaction vessel equipped with a magnetic stirrer. Ensure the dispersion is homogeneous by stirring continuously. Next, slowly add the 4 gm allantoin-isocyanate prepolymer to the dispersion while maintaining a constant stirring rate and elevated temperature 80°C for 2 hrs to facilitate the reaction. The isocyanate groups on the allantoin-isocyanate prepolymer will react with the amine groups on the aminated silica particles, forming urethane linkages and grafting the allantoin-isocyanate prepolymer onto the surface of aminated silica particles. This result in the formation of modified particles, or allantoin-aminated silica particles (i.e. Silica **A²**). Wash the modified particles thoroughly with a solvent like hexane to remove any unreacted prepolymer and by-products. Finally, dry the modified silica particles in a vacuum oven at 60-80°C until all solvents are evaporated, or alternatively, allow them to air-dry under a fume hood. The resulting silica **A²** is then ready for further use or characterization.

### IV. Process for preparing Epoxy-polysulphide coating composition:

To prepare an epoxy-polysulfide coating composition with modified silica particles, begin by thoroughly dispersing the modified silica particles (i.e. Silica **A²**) in an epoxy resin (i.e. epoxy resin **A**), using a high-speed disperser to achieve a uniform mixture after dispersing Silica **A²** in epoxy resin **A,** add modified pigment paste (Silquest A187 Titanium Dioxide, Blue Pigment and Pink pigment paste) in order to achieve required colours. Pigment paste has been kept constant to achieve uniform colours. This Silica **A²** modified epoxy resin base is termed as a resin component. In a separate container, a hardener component is prepared by mixing an amine (Jefamine D230) amine with a liquid polysulfide (Thiokol LP3).

Once the resin mixture is homogeneous, add the hardener component to it, blending them well based on stoichiometric ratio of hardener : resin 50 gm : 100 gm to form a consistent homogeneous blue colour Silica **A²** modified epoxy polysulfide coating composition. The resulting epoxy-polysulfide coating composition with a modified silica filler is then ready for application, offering enhanced mechanical properties, adhesion, and durability.

### Concrete Substrate preparation, Coating, Scribing, and Testing:

### (i) Substrate preparation:

A 10 cm x 10 cm specimen of freshly prepared cementitious grout should be cast and cured for one day at room temperature. After this, the specimen should be submerged in water for seven days and then dried thoroughly for 21 days to serve as the substrate. All surfaces must be free of oil, grease, loose materials, and curing compounds (wax-based membranes should not be used in areas to be coated). Concrete surface should be cleaned using high-pressure water jetting, grit blasting, or other methods approved by the engineer to ensure a suitable mechanical bond for optimal adhesion. It is essential that surface preparation is meticulously completed before applying the epoxy polysulfide coating. If required the concrete substrate is repaired and/or primed to remove any surface imperfections using suitable SikaEmaco or Sikadur repair systems.

### (ii) Application of epoxy-polysulfide coating composition:

The epoxy polysulfide coating composition is preferably supplied in two pre-weighed components, resin and hardener. The components are thoroughly mixed using a slow speed drill fitted with a suitable mixing padle/by hand with spatula until a uniform streak free color is achieved. The mixing process shall be continued atleast for 2 minutes.

The epoxy polysulfide coating composition can be applied onto the substrate using one or more techniques known to the person skilled in the art such as brushing, rolling or spraying airless spray. The dry film thickness (DFT) of the 500 microns is achieved.

The coated substrates were allowed to cure for 7 days prior to subjecting them to scribing tests.

Test samples of coated concrete substrates were prepared using epoxy-polysulfide coatings with varying concentrations of the Silica **A²** (i.e. 0%, 3%, 5%, 10% & 20%). The composition details are as provided below:

| Raw materials by % | Control | Trial (I) | Trial (II) | Trial (III) | Trial (IV) |
|---|---|---|---|---|---|
| Resin Component: Epoxy Blue Pigmented base with thixotropic agent | 100 | 97% | 95% | 90% | 80% |
| Silica **A²** | 0 | 3% | 5% | 10% | 20% |
| Hardener Component | 55% | 55% | 55% | 55% | 55% |

A reference test sample (i.e. Control) was prepared by coating an epoxy-polysulfide coating composition prepared without using the inventive Silica **A².**

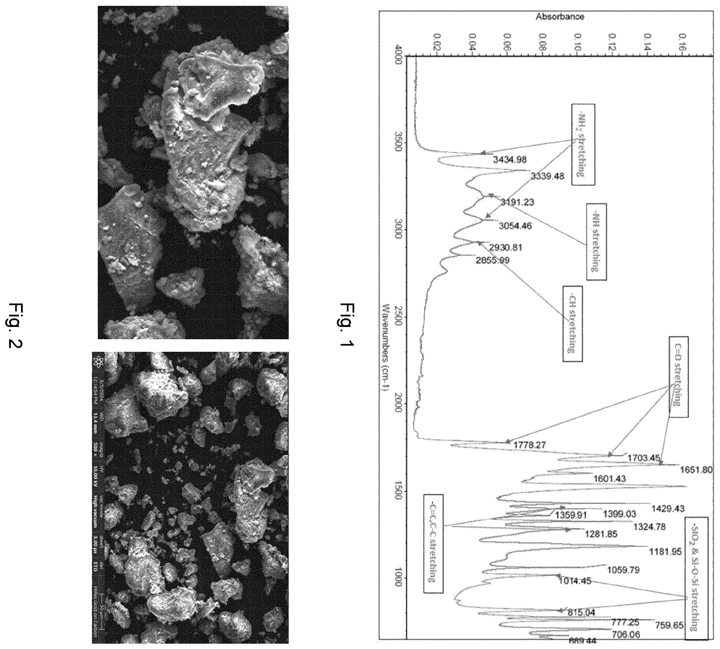

**Figure 1** depicts the FTIR spectra of the Silica **A²** (i.e. Allantoin-aminated silica).

The FTIR spectrum analysis reveals several characteristic absorption bands corresponding to different functional groups present in the sample. The -NH2 stretching vibrations are observed at 3434.98 cm⁻¹ and 3054.46 cm⁻¹, indicating the presence of primary amine groups. The -NH stretching is detected at 3191.23 cm⁻¹, further confirming the presence of amine functionalities. The -CH stretching, associated with aliphatic hydrocarbon chains, is seen at 2930.81 cm⁻¹. The carbonyl (C=O) stretching vibrations are prominent at 1778.27 cm⁻¹, 1703.45 cm⁻¹, and 1651.80 cm⁻¹, suggesting the presence of carbonyl-containing groups such as esters or amides. The characteristic -SiO₂ and -Si-O-Si- stretching vibrations are observed at 1014.45 cm⁻¹ and 815.04 cm⁻¹, indicative of the silica framework. Finally, the stretching vibrations at 1399.03 cm⁻¹ and 1281.85 cm⁻¹ correspond to -C=C- and -C-C-bonds, indicating the presence of alkenes or aromatic rings in the structure. This spectrum provides a comprehensive insight into the functional groups present, confirming the successful modification and composition of the sample.

**Figure 2** depicts the SEM images of the of the Silica **A²** (i.e. Allantoin-aminated silica)

The SEM images of the silica **A²** reveal significant details about their morphology and surface characteristics. The images show that the silica **A²** have a uniform and well-defined structure, with a consistent size distribution across the sample. The surface of the particles appears to be smooth, yet some images may reveal roughness or irregularities due to the functionalization process. These surface modifications, likely resulting from the introduction of amino groups or other chemical treatments, suggest an increased surface area and potential active sites, which are critical for enhancing the particles' reactivity and performance in various applications. The high-resolution images also highlight the integrity of the silica framework, demonstrating that the modification process did not compromise the structural stability of the particles. Overall, the SEM analysis confirms the successful modification of the silica particles and provides visual evidence of their enhanced surface properties.

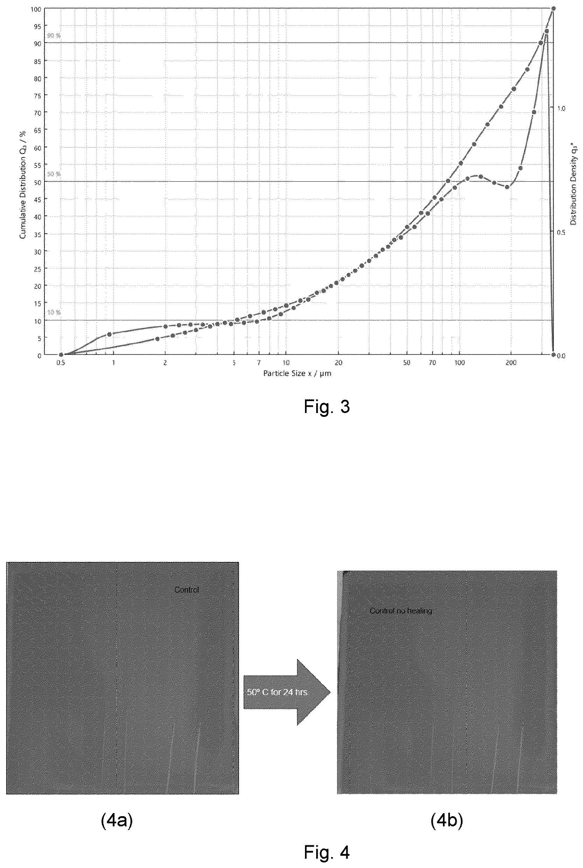

**Figure 3** depicts the particle size distribution of the of the Silica **A²** (i.e. Allantoin-aminated silica)

### Mechanical Test Results:

The results of the mechanical tests are summarized in the Table 1.

**Table 1**

| **Comparison of Mechanical Properties** | | | | | |
|---|---|---|---|---|---|
| S. No. | Silica **A²** Dosage in % | Tensile strength in MPa | Elongation in % | Abrasion Resistance in mg | Contact Angle |
| Control | 0 | 8.5 | 72 | 73 | - |
| Trial (I) | 3% | 3 | 42 | 47 | 69 |
| Trial (II) | 5% | 3 | 39 | 35 | 89 |
| Trial (III) | 10% | 7.8 | 23 | 28 | 101 |
| Trial (IV) | 20% | 5.4 | 17 | 58 | 79 |

It has been observed that trial (III), in which the content of Silica **A²** is 10%, gives excellent results with regards to the abrasion resistance and tensile strength. Also, the contact angle in the case of trial (III) is maximum (> 90), which indicates that the surface is highly hydrophobic. Such a high contact angle suggests that the coating has excellent water-repellent properties, making it suitable for applications where moisture resistance, self-cleaning capabilities, or protection against corrosion is essential. The high contact angle implies that the coating forms an effective barrier to liquids, reducing the risk of liquid ingress and surface degradation.

The coated concrete substrates were subjected to scribing tests. These scribes are typically created as part of a testing procedure to evaluate the self-healing performance of the coating.

Each sample of the coated concrete substrate was damaged using a razor blade mounted into an Erichsen model 639 panel scratcher. The scribes on the coated concrete samples were of the size of 100 microns and 500 microns, which refers to the width or depth of the intentional scratches or grooves made on the surface.

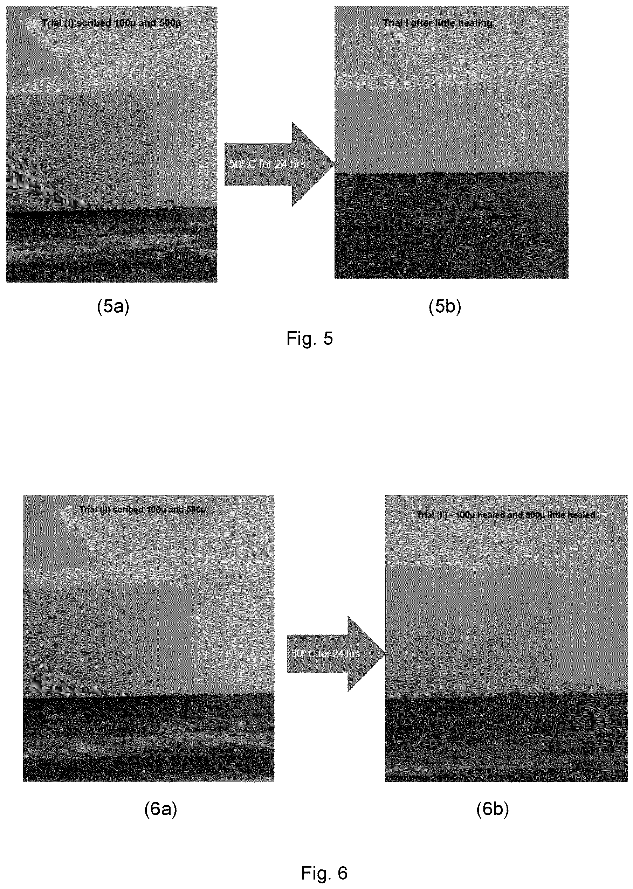

The resulting panels were then photographed to document evidence of healing in the coated concrete samples. The results of which are showcased in **Figure** 4, 5, 6, 7 & 8.

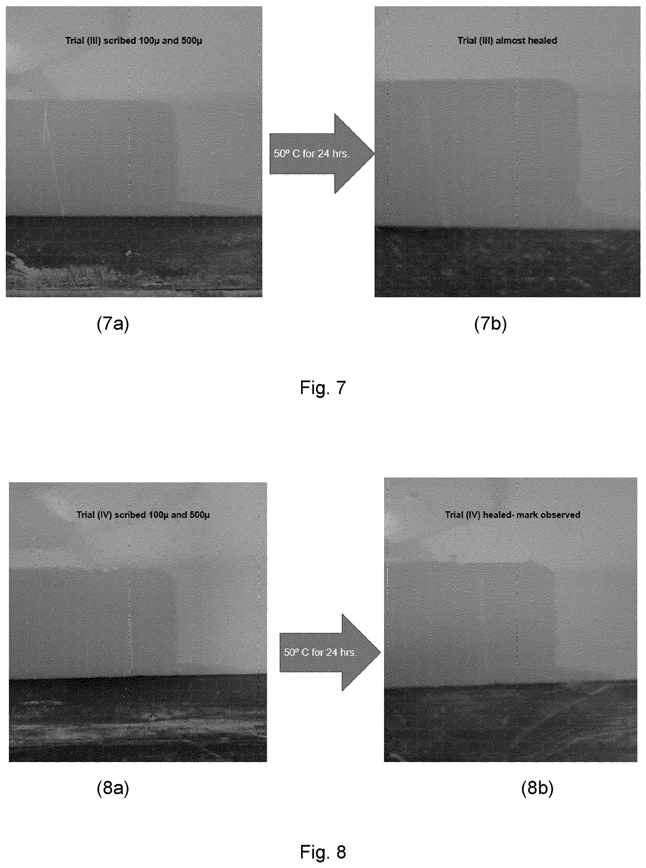

From **Figure 4****,** It can be observed that the control sample does not undergo any self-healing. The maximum self-healing was observed in case of trial (III), as evident from the photographic images depicted in **Figure 7****.**

## Claims

1. An epoxy-polysulfide coating composition, comprising:
i. at least one epoxy resin **A** having more than one epoxy group per molecule on average;
ii. at least one polysulphide resin; and
iii. Silica **A²**, wherein the silica **A²** is an aminated silica modified with an allantoin.

2. The epoxy-polysulfide coating composition as claimed in claim 1, **characterized in that** the epoxy-polysulfide coating composition further comprises one or more materials selected from the group consisting of a curing agent, an additive, an adhesion promoter, a filler, an accelerator, and a pigment.

3. The epoxy-polysulfide coating composition as claimed in any of the preceding claims, **characterized in that** the epoxy resin **A** is selected from the group consisting of at least one bisphenol A epoxy resin, bisphenol F epoxy resin, novolac epoxy resin, aliphatic epoxy resin, cycloaliphatic epoxy resin, glycidylamine epoxy resin, or a combination thereof.

4. The epoxy-polysulfide coating composition as claimed in any of the preceding claims, **characterized in that** the polysulfide resin is selected from the group consisting of at least one aliphatic polysulfide, an aromatic polysulfide, a thiol-terminated polysulfide, a mercaptan-terminated polysulfide, and mixtures thereof.

5. The epoxy-polysulfide coating composition as claimed in any of the preceding claims, **characterized in that** the silica **A²** has mean particle size in the range of 0.5-300 µm, preferably 10-250 µm, more preferably 20-100 µm, even more preferably 25-70 µm, wherein the mean particle size is preferably determined by laser diffractometry.

6. The epoxy-polysulfide coating composition as claimed in any of the preceding claims, **characterized in that** the silica particles **A²** is present in 1-50%, preferably 2-35%, more preferably 3-30%, even more preferably 3-20% by weight, based on the total weight of the epoxy-polysulfide coating composition.

7. The epoxy-polysulfide coating composition as claimed in any of the preceding claims, **characterized in that** the epoxy-polysulfide coating composition is a two-part composition consisting of a resin component and a hardener component, wherein:
a) the resin component preferably comprises:
50-70 wt% of the epoxy resin A;
3-20 wt% of the Silica A2;
0-10 wt% of the pigment; and
b) the hardener component preferably comprises:
10-60 wt% of the polysulfide resin; and
10-60 wt% of the curing agent, wherein the curing agent is preferably selected from the group consisting of an amine and/or a polyamide, and wherein the weight percentages are based on the total weight of the epoxy-polysulfide coating composition.

8. The epoxy-polysulfide coating composition as claimed in any of the preceding claims, **characterized in that** the silica **A²** is obtained by a process comprising the steps of:
i. modifying silica particles by using an aminosilane to obtain aminated silica particles;
ii. reacting allantoin with a polyisocyanate, preferably a diisocyanate to obtain an allantoin-isocyanate prepolymer; and
iii. reacting the aminated silica particles with the allantoin-isocyanate prepolymer to obtain Silica **A².**

9. The epoxy-polysulfide coating composition as claimed in claim 8, **characterized in that** the aminosilane is preferably 3-aminopropyltrimethoxysilane or 3-aminopropyltriethoxysilane, more preferably 3-aminopropyltriethoxysilane.

10. The epoxy-polysulfide coating composition as claimed in claims 8-9, **characterized in that** the diisocyanate is preferably an aliphatic diisocyanate, or an aromatic diisocyanate, or a cycloaliphatic diisocyanate, more preferably an aliphatic diisocyanate, even more preferably 1, 6-hexamethylene diisocyanate (HDI).

11. A coated substrate, **characterized in that** at least a portion of the said substrate is coated with the epoxy-polysulfide coating composition of any of the preceding claims.

12. The coated substrate as claimed in claim 11, **characterized in that** the substrate is selected from the group consisting of cementitious substrates, concrete, steel, and wood, preferably concrete or steel, and more preferably concrete.

13. A silica filler for coating compositions, **characterized in that** the silica filler comprises silica **A²**, wherein the silica **A²** is an aminated silica modified with an allantoin.

14. A method for self-healing the coated substrate as claimed in claims 11-12, after it has been damaged by a scratch or a crack, preferably by a scratch, **characterized in that** the method comprises the steps of:
iii. optionally placing the coated substrate according to any of the preceding claims inside an oven; and
iv. heating the coated substrate to a temperature from 30 °C to 100 °C, preferably from 35 °C to 50 °C, preferably for 15 Hrs to 10 days, preferably 24 Hrs to 7 days.

15. The method for self-healing the coated substrate as claimed in claim 14, **characterized in that** the size of the scratch is 20-300 micron, preferably 50-200 micron, more preferably 70-150 micron, even more preferably 80-120 micron.

16. Use of the epoxy-polysulfide coating composition as claimed in claims 1-10 to self-repair damages on a surface of the coated substrate.
